# EUROPÄISCHE PATENTANMELDUNG

(11) **EP 3 144 075 A1**
(43) Veröffentlichungstag der Anmeldung: **22.03.2017**
(21) Anmeldenummer: 15185783.6
(22) Anmeldetag: 18.09.2015
(51) Int. Cl.: B21C 37/29, B23B 51/08, B21D 28/34, B21D 19/08

(54) **INNENROLLIERDORN ZUM EINBRINGEN EINER AUSHALSUNG IN EINEN HOHLKÖRPER**

(71) Anmelder: Transfluid Maschinenbau GmbH, 57392 Schmallenberg (DE)
(72) Erfinder: Pieper, Gerhard, 57392 Schmallenberg (DE)
(74) Vertreter: Grosse, Wolf-Dietrich Rüdiger

(57) **Zusammenfassung**

Die Erfindung betrifft einen Innenrollierdorn 100 zum Einbringen einer Aushalsung 210 in die Wandung eines vorzugsweise metallischen Hohlkörpers 200, insbesondere eines Rohres. Der Innenrollierdorn weist einen Schaftabschnitt 110 auf zum Einspannen in ein Spannfutter einer Drehmaschine und einen Rollierabschnitt mit einem Rollierkopf zum Rollieren des Hohlkörpers. Um mit dem Innenrollierdorn auch das Bohren eines Loches in die Wandung des Hohlkörpers und damit das Einbringen der Aushalsung in die Wandung des Hohlkörpers effizienter durchführen zu können, weist der erfindungsgemäße Innenrollierdorn an seinem dem Schaftabschnitt gegenüberliegenden Ende einen Bohrer 135 auf zum Bohren des Loches in die Wandung des Hohlkörpers. Bei dem erfindungsgemäßen Rollierdorn ist der Rollierabschnitt zwischen dem Bohrabschnitt und dem Schaftabschnitt ausgebildet und der Rollierabschnitt weist eine rotationssymmetrische Einkerbung auf.

## Beschreibung

Die Erfindung betrifft einen Innenrollierdorn zum Einbringen einer Aushalsung in die Wandung eines vorzugsweise metallischen Hohlkörpers, insbesondere eines Rohres. Darüber hinaus betrifft die Erfindung eine Vorrichtung zum Betreiben des Innenrollierdorns und ein Verfahren zum Betreiben der Vorrichtung.

Derartige Innenrollierdorne sind im Stand der Technik grundsätzlich bekannt. Die bekannten Rollierdorne weisen typischerweise an einem ihrer Enden einen Schaftabschnitt auf zum Einspannen des Rollierdorns in ein Spannfutter einer Drehmaschine. An ihrem anderen Ende weisen die bekannten Innenrollierdorne typischerweise einen Rollierabschnitt mit beispielsweise einem Kopf in Form einer Kugel auf zum Rollieren des Hohlkörpers.

Ausgehend von diesem Stande der Technik liegt der Erfindung die Aufgabe zugrunde, einen bekannten Innenrollierdorn, eine Vorrichtung zum Betreiben des Innenrollierdorns sowie ein Verfahren zum Betreiben der Vorrichtung dahingehend weiterzubilden, dass mit dem Innenrollierdorn auch das Einbringen eines Loches in die Wandung des Hohlkörpers für die Aushalsung möglich ist.

Diese Aufgabe wird durch den Gegenstand des Patentanspruchs 1 gelöst. Dieser ist dadurch gekennzeichnet, dass der Innenrollierdorn an seinem anderen Ende - in einem Bohrabschnitt - in Form eines Bohrers ausgebildet ist zum Bohren eines Loches in die Wandung des Hohlkörpers; dass der Rollierabschnitt zwischen dem Bohrabschnitt und dem Schaftabschnitt ausgebildet ist und dass der Rollierabschnitt eine rotationssymmetrische Einkerbung aufweist.

Typischerweise meint der Begriff "Einkerbung" im Sinne der Erfindung eine - im Längsschnitt des Innenrollierdorns betrachtet - beidseitig, d. h. auf Seite des Bohrabschnitts und des Schaftabschnitts begrenzte Vertiefung in dem Rollierabschnitt. Der Begriff "Einkerbung" kann jedoch im Sinne der vorliegenden Erfindung auch lediglich eine einseitige Begrenzung der Einkerbung durch die dem Bohrabschnitt zugewandte konvexe Flanke vorsehen, während die dem Schaftabschnitt zugewandte Flanke entfallen kann; dies ist beispielsweise dann der Fall, wenn der Außenradius des Schaftabschnittes nicht größer ist als der kleinste Durchmesser des Innenrollierdorns im Bereich der Einkerbung, d. h. wenn der Außendurchmesser des Schaftabschnittes beispielsweise mit dem kleinsten Außendurchmesser im Bodenbereich der Einkerbung übereinstimmt. Typischerweise ist jedoch der Außendurchmesser des Schaftabschnittes deutlich größer als der Durchmesser des Bodens der Einkerbung und in der Regel auch größer als der Durchmesser des Bohrabschnittes.

Durch das Vorsehen des Bohrers an dem dem Schaftabschnitt gegenüberliegenden Ende des Innenrollierdorns ist der Innenrollierdorn vorteilhafterweise ausgebildet, auch das Loch in die Wandung des Hohlkörpers einzubringen. Somit ist der erfindungsgemäße Innenrollierdorn vorteilhafterweise nicht nur für seine originäre Aufgabe, nämlich zum Rollieren des Hohlkörpers, d. h. zum Einbringen der Aushalsung in die Wandung, sondern auch zur Durchführung des vorgelagerten notwendigen Schrittes, nämlich das Einbringen des Loches in die Wandung des Hohlkörpers ausgebildet. Es bedarf deshalb vorteilhafterweise für die Durchführung der beiden besagten Schritte, nämlich für das Bohren des Loches in die Wandung und das Rollieren des Hohlkörpers keiner unterschiedlichen Werkzeuge, sondern beide Schritte können mit ein und demselben Werkzeug ausgeführt werden; dadurch kann die Rüstzeit für das Nachrüsten eines zweiten Werkzeugs vorteilhafterweise eingespart werden. Auch können die Kosten für das zweite separate Werkzeug, sei es der separate Bohrer oder der separate Innenrollierdorn eingespart werden.

Gemäß einem ersten Ausführungsbeispiel ist die dem Bohrabschnitt zugewandte rotationssymmetrische Flanke der Einkerbung - im Längsschnitt des Innenrollierdorns betrachtet - konvex ausgebildet. Diese konvexe Flanke repräsentiert bei dem erfindungsgemäßen Innenrollierdorn das eigentliche Rollierwerkzeug zum Aufwölben der Wandung des Hohlkörpers. Vorzugsweise ist deshalb die Oberfläche der konvexen Flanke glatt ausgebildet. Weiterhin ist die Einkerbung begrenzt durch eine dem Schaftabschnitt zugewandte rotationssymmetrische Flanke, die - im Längsschnitt des Innenrollierdorns betrachtet - konkav, vorzugsweise als scharf begrenzter Winkel von 90° ausgebildet ist. Diese konkave Flanke geht vorzugsweise stetig differenzierbar, d. h. glatt, ohne Knick, in eine dem Rollierabschnitt zugewandte Stirnseite des Schaftabschnittes über, die - im Längsschnitt des Innenrollierdorns betrachtet - in Form einer Ebene ausgebildet ist, die senkrecht auf der Längsachse des Innenrollierdorns steht.

Die erfindungsgemäße Ausbildung der Oberfläche der Stirnseite des Schaftabschnitts, sowie vorzugsweise auch die Oberfläche der konkaven Flanke der Einkerbung sind bei dem erfindungsgemäßen Innenrollierdorn vorzugsweise als spanabhebendes Werkzeug ausgebildet. Mit diesem spanabhebenden Werkzeug ist dann vorteilhafterweise auch ein Planieren bzw. Entgraten der Aushalsung an ihrer Stirnseite möglich.

Die oben genannte Aufgabe der Erfindung wird weiterhin gelöst durch eine Vorrichtung zum Betreiben eines Innenrollierdorns nach einem der vorangegangenen Ansprüche gemäß Anspruch 8. Die Vorrichtung weist eine Spanneinrichtung auf zum drehfesten Einspannen des Innenrollierdorns an seinem Schaftabschnitt, einen Drehantrieb zum Drehantreiben der Spanneinrichtung mit dem eingespannten Innenrollierdorn und eine Verlagerungseinrichtung zum Verlagern der Spanneinrichtung mit dem eingespannten Innenrollierdorn in axialer und / oder radialer Richtung. Die Spanneinrichtung, der Drehantrieb und die Verlagerungseinrichtung sind vorzugsweise in einer baulichen Einheit integriert.

Die Begriffe "axiale Richtung" und "radiale Richtung" beziehen sich in der vorliegenden Beschreibung immer auf die Längsachse des Innenrollierdorns.

Die oben genannte Aufgabe wird weiterhin gelöst durch ein Verfahren zum Betreiben der erfindungsgemäßen Vorrichtung gemäß den Ansprüchen 9 und 10.

Der Beschreibung sind insgesamt fünf Figuren beigefügt, wobei
- Figur 1: einen Längsschnitt durch den Innenrollierdorn und die Vorrichtung zum Betreiben des Innenrollierdorns;
- Figur 2: eine Anstellung des Innenrollierdorns an den Hohlkörper zu Beginn des Verfahrens zum Einbringen der Aushalsung in einem Längsschnitt und in einer perspektivischen Ansicht;
- Figur 3: den Innenrollierdorn nach dem Bohren eines Loches in die Wandung des Hohlkörpers in einem Längsschnitt und in einer perspektivischen Ansicht;
- Figur 4: den Innenrollierdorn zu Beginn des Rolliervorgangs zum Einbringen der Aushalsung in einem Längsschnitt und in einer perspektivischen Ansicht; und
- Figur 5: den Innenrollierdorn am Ende des Rolliervorgangs mit der ausgebildeten Aushalsung in der Wandung des Hohlkörpers in einem Längsschnitt und in perspektivischer Ansicht
zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet.

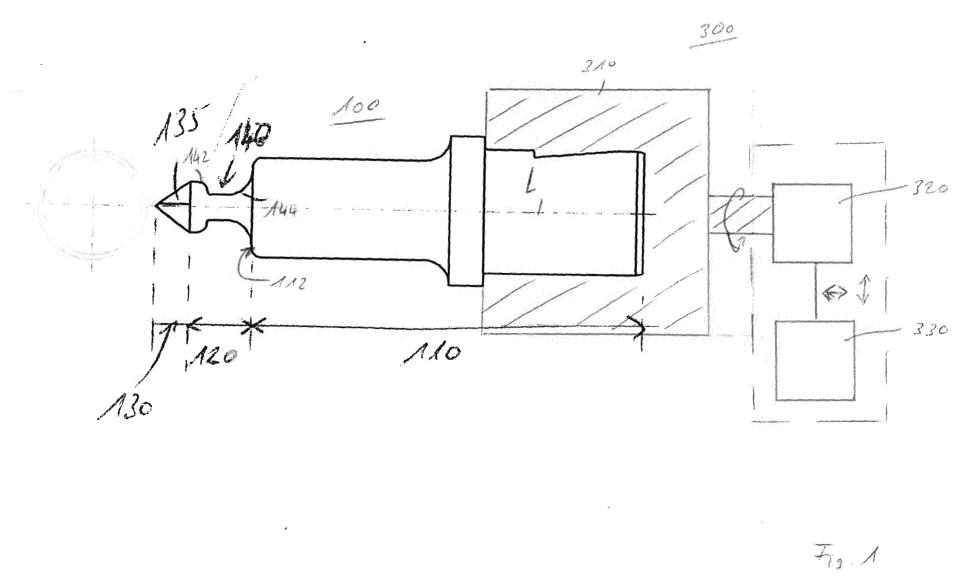

Figur 1 zeigt den erfindungsgemäßen Innenrollierdorn 100, eingespannt in eine Vorrichtung 300.

Der erfindungsgemäße Innenrollierdorn umfasst einen Schaftabschnitt 110, der zumindest teilweise zum Einspannen des Innenrollierdorns 100 in eine Spanneinrichtung 310, insbesondere ein Spannfutter, der Vorrichtung 300 dient. An den Schaftabschnitt 110 schließt sich ein Rollierabschnitt 120 mit einer rotationssymmetrischen Einkerbung 140 an. An seinem dem Schaftabschnitt gegenüberliegenden Ende - in einem Bohrabschnitt 130 - ist der Innenrollierdorn 100 in Form eines Bohrers 135 ausgebildet zum Bohren eines Loches in die Wandung eines vorzugsweise metallischen Hohlkörpers. Wie in der Figur 1 zu erkennen ist, ist der Rollierabschnitt 120 zwischen dem Bohrabschnitt 130 und dem Schaftabschnitt 110 ausgebildet.

Die rotationssymmetrische Einkerbung 140 weist eine dem Bohrabschnitt 130 zugewandte rotationssymmetrische Flanke 142 auf, welche - im Längsschnitt des Innenrollierdorns 100 betrachtet - konvex ausgebildet ist. Diese konvexe Flanke repräsentiert das eigentliche Rollierwerkzeug zum Aufwölben des Loches in der Wandung des Hohlkörpers, d. h. zum Einbringen der Aushalsung in die Wandung des Hohlkörpers. Die Oberfläche dieser konvexen Flanke 142 ist typischerweise glatt ausgebildet. Der komplette Innenrollierdorn ist typischerweise aus Metall gefertigt.

An ihrem anderen Ende ist die Einkerbung durch eine dem Schaftabschnitt 110 zugewandte rotationssymmetrische Flanke 144 begrenzt, welche - im Längsschnitt des Innenrollierdorns betrachtet - konkav, vorzugsweise als scharf begrenzter rechter Winkel, ausgebildet ist. Die konkave Flanke 144 der Einkerbung geht - im Längsschnitt des Innenrollierdorns betrachtet - stetig differenzierbar in eine radial weiter außenliegende ebene Stirnseite 112 des Schaftabschnitts 110 über. Die Stirnseite 112 ist - im Längsschnitt des Innenrollierdorns betrachtet - in Form einer Ebene ausgebildet, die senkrecht auf der Längsachse L des Innenrollierdorns 100 steht. Die Oberfläche der Stirnseite 112, sowie vorzugsweise auch die Oberfläche der konkaven Flanke 144 der Einkerbung ist bzw. sind erfindungsgemäß vorzugsweise als spanabhebendes Werkzeug ausgebildet.

Wie in Figur 1 weiterhin zu erkennen ist, ist der Innenrollierdorn 100 bei seinem Betrieb in die Spanneinrichtung 310, d. h. ein Spannfutter der Vorrichtung 300 eingespannt, die zum Betreiben des Innenrollierdorns dient. Konkret weist die Vorrichtung 300 neben der Spanneinrichtung 310 einen Drehantrieb 320 auf zum Drehantreiben der Spanneinrichtung mit dem eingespannten Innenrollierdorn 100 sowie eine Verlagerungseinrichtung 330 zum Verlagern der Spanneinrichtung 310 mit dem eingespannten Innenrollierdorn in axialer und / oder radialer Richtung.

Zum Einbringen einer Aushalsung in die Wandung eines vorzugsweise metallischen Hohlkörpers, insbesondere eines Rohres, wird die Vorrichtung 300 mit dem Innenrollierdorn 100 gemäß den folgenden Verfahrensschritten betrieben:
Zunächst wird der erfindungsgemäße Innenrollierdorn 100 zumindest mit einem Teil seines Schaftabschnittes 110 in die Spanneinrichtung 310 der Vorrichtung 300 drehfest eingespannt, siehe Figur 1, siehe Figur 1.

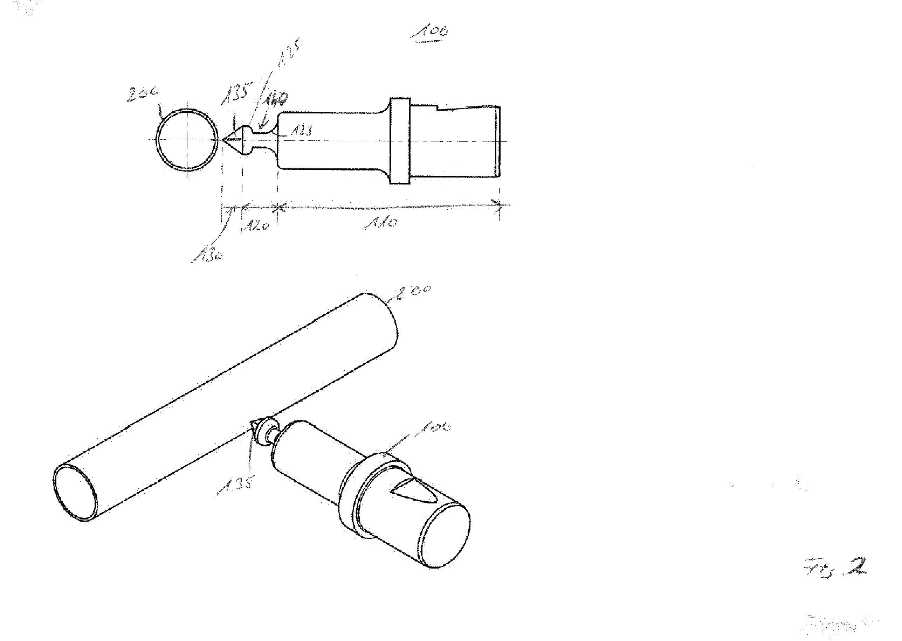

Außerdem wird der Hohlkörper 200, in dessen Wandung die Aushalsung angebracht werden soll, drehfest eingespannt, und zwar so, dass die Wandung des Hohlkörpers mit der Längsachse des eingespannten Innenrollierdorns einen Winkel < 180°, beispielsweise 90° bildet, wie dies in den Figuren 2 bis 5 veranschaulicht ist. In diesen Figuren 2 bis 5 ist - der Einfachheit halber - auf die Darstellung der Vorrichtung 300 sowie der Einspanneinrichtung für den Hohlkörper 200 verzichtet worden; gleichwohl werden diese Einrichtungen jedoch zur Durchführung des Verfahrens gemäß den Figuren 2 bis 5 vorausgesetzt.

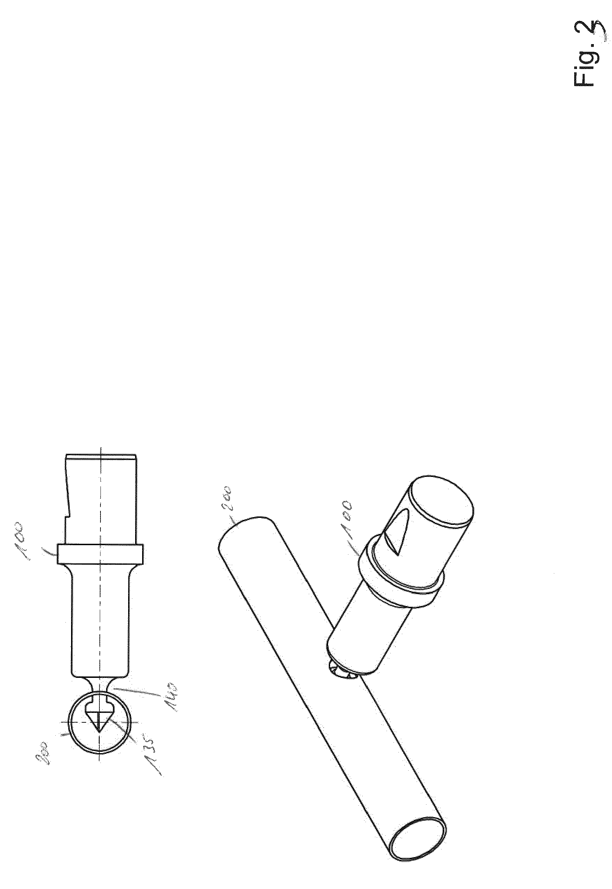

Ausgehend von der in Figur 2 dargestellten Anstellung des Innenrollierdorns 100 gegen die Wandung des Hohlkörpers erfolgt gemäß Figur 3 das Bohren eines Loches in die Wandung des Hohlkörpers 200 mit dem Bohrer 135 an der Spitze des Innenrollierdorns 100. Zu diesem Zweck wird der Innenrollierdorn mit Hilfe der Vorrichtung 300 drehangetrieben und axial gegen den Hohlkörper verschoben. Die axiale Verschiebung erfolgt soweit, dass die Einkerbung 140 in dem Rollierabschnitt 120 des Innenrollierdorns 100 auf Höhe des Randes des Loches in der Wandung des Hohlkörpers steht und der Bohrer 135 vollständig von dem Hohlkörper 200 aufgenommen ist so, wie dies in Figur 3 dargestellt ist.

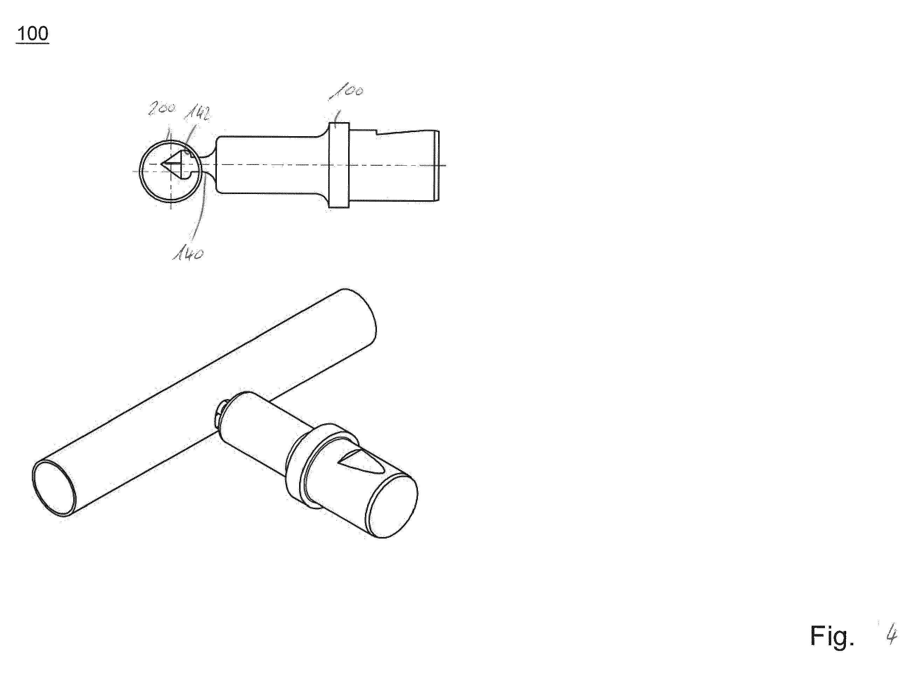

Die in Figur 3 dargestellte Relativposition von Innenrollierdorn 100 und Hohlkörper 200 dient als Ausgangsposition für den eigentlichen Rolliervorgang, d. h. für die Ausbildung der Aushalsung in der Wandung des Hohlkörpers. Dazu wird der Innenrollierdorn radial derart verlagert, und der Boden oder die dem Bohrabschnitt 130 zugewandte Flanke 142 der Einkerbung rollt auf dem Rand des Loches freistehend ab, wie dies in Figur 4 schematisch dargestellt ist.

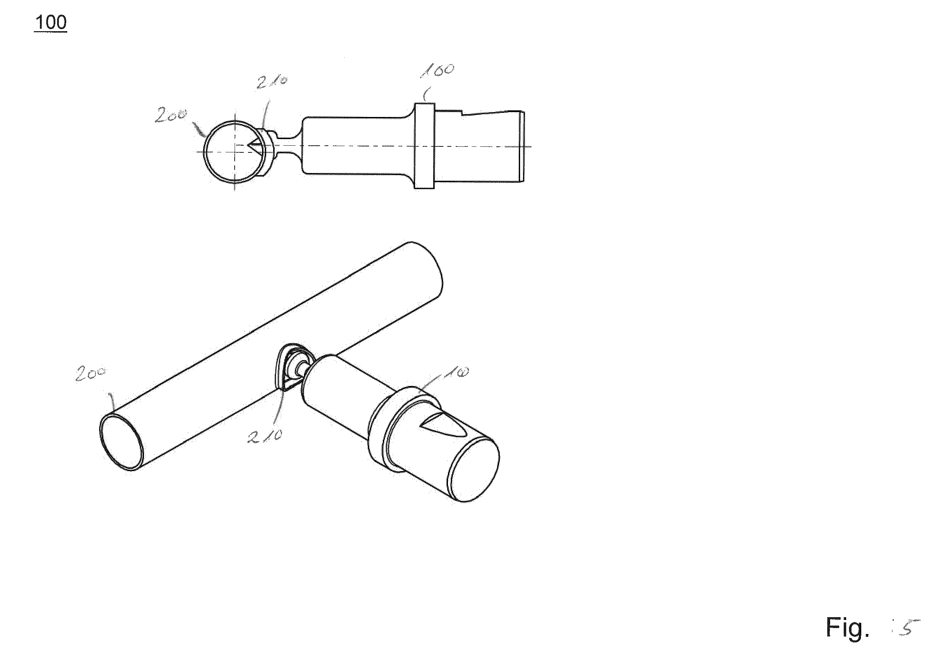

Durch ein zunehmendes Verlagern des Innenrollierdorns 100 axial von dem Hohlkörper weg bei gleichzeitigem Abrollen des Innenrollierdorns wird die Wandung des Hohlkörpers im Randbereich des Loches nach außen aufgewölbt, so dass die gewünschte Aushalsung 210 entsteht, wie dies in Figur 5 anschaulich dargestellt ist.

Nach Ausbildung der Aushalsung 210 wird der Innenrollierdorn 100 vorzugsweise wieder auf den Hohlkörper 200 bzw. die Aushalsung 210 hin axial verlagert, so dass die Stirnseite 112 des Schaftabschnitts dem aufgewölbten Rand des Loches gegenübersteht. Durch weiteres Verlagern des Innenrollierdorns auf den Hohlkörper, insbesondere die Aushalsung 210, zu, bei gleichzeitigem Rotieren des Innenrollierdorns 100, kann ein Planieren und Entgraten der Stirnseite des Aushalsung mit der als spanabhebendes Werkzeug ausgebildeten Stirnseite 112 des Schaftabschnittes 110 erfolgen.

### Bezugszeichenliste

- 100: Innenrollierdorn
- 110: Schaftabschnitt
- 112: Stirnseite des Schaftabschnittes
- 120: Rollierabschnitt
- 130: Bohrabschnitt
- 135: Bohrer
- 140: Einkerbung
- 142: konvexe Flanke
- 144: konkave Flanke
- 200: Hohlkörper
- 210: Aushalsung
- 300: Vorrichtung zum Betreiben des Innenrollierdorns
- 310: Spanneinrichtung
- 320: Drehantrieb
- 330: Verlagerungseinrichtung

- L: Längsachse des Innenrollierdorns

## Patentansprüche

1. Innenrollierdorn (100) zum Einbringen einer Aushalsung (210) in die Wandung eines vorzugsweise metallischen Hohlkörpers (200), insbesondere eines Rohres, aufweisend:
einen Schaftabschnitt (110) an einem Ende des Innenrollierdorns (100) zum Einspannen des Innenrollierdorns in eine Spanneinrichtung (310); und
einen Rollierabschnitt (120) zum Rollieren des Hohlkörpers;
**dadurch gekennzeichnet,**
**dass** der Innenrollierdorn (100) an seinem anderen Ende - in einem Bohrabschnitt (130) - in Form eines Bohrers (135) ausgebildet ist zum Bohren eines Loches in die Wandung des Hohlkörpers (200);
**dass** der Rollierabschnitt (120) zwischen dem Bohrabschnitt (130) und dem Schaftabschnitt (110) ausgebildet ist; und
**dass** der Rollierabschnitt (120) eine rotationssymmetrische Einkerbung (140) aufweist.

2. Innenrollierdorn (100) nach Anspruch 1,
**dadurch gekennzeichnet, dass**
die dem Bohrabschnitt (130) zugewandte rotationssymmetrische Flanke (142) der Einkerbung - im Längsschnitt des Innenrollierdorns betrachtet - konvex ausgebildet ist.

3. Innenrollierdorn (100) nach Anspruch 2,
**dadurch gekennzeichnet, dass**
die Oberfläche der konvexen Flanke (142) der Einkerbung glatt ausgebildet ist.

4. Innenrollierdorn (100) nach einem der vorangegangenen Ansprüche, **dadurch gekennzeichnet, dass**
die dem Schaftabschnitt (110) zugewandte rotationssymmetrische Flanke (144) der Einkerbung - im Längsschnitt des Innenrollierdorns betrachtet - konkav, vorzugsweise als scharf begrenzter Winkel von 90°, ausgebildet ist.

5. Innenrollierdorn (100) nach einem der vorangegangenen Ansprüche,
**dadurch gekennzeichnet,**
**dass** die dem Rollierabschnitt (120) zugewandte Stirnseite (112) des Schaftabschnitts (110) - im Längsschnitt des Innenrollierdorns betrachtet - in Form einer Ebene ausgebildet ist, die senkrecht auf der Längsachse (L) des Innenrollierdorns (100) steht.

6. Innenrollierdorn (100) nach Anspruch 4 und 5,
**dadurch gekennzeichnet,**
**dass** die konkave Flanke (144) der Einkerbung - im Längsschnitt des Innenrollierdorns betrachtet - stetig differenzierbar in die ebene Stirnseite (112) des Schaftabschnitts übergeht.

7. Innenrollierdorn (100) nach einem der Ansprüche 4 bis 6,
**dadurch gekennzeichnet, dass**
die Oberfläche der Stirnseite (112) des Schaftabschnitts (110), sowie vorzugsweise auch die Oberfläche der konkaven Flanke (144) der Einkerbung, als spanabhebendes Werkzeug ausgebildet ist.

8. Vorrichtung (300) zum Betreiben des Innenrollierdorns (100) nach einem der vorangegangenen Ansprüche; **gekennzeichnet durch**:
eine Spanneinrichtung (310) zum drehfesten Einspannen des Innenrollierdorns (100) an seinem Schaftabschnitt (110);
einen Drehantrieb (320) zum Drehantreiben der Spanneinrichtung (310) mit dem eingespannten Innenrollierdorn; und
eine Verlagerungseinrichtung (330) zum Verlagern der Spanneinrichtung (310) mit dem eingespannten Innenrollierdorn (100) in axialer und/oder radialer Richtung.

9. Verfahren zum Betreiben der Vorrichtung nach Anspruch 8 mit dem Innenrollierdorn (100) nach einem der Ansprüche 1 bis 7,
**gekennzeichnet durch** folgende Schritte:
- drehfestes Einspannen des Innenrollierdorns (100) an seinem Schaftabschnitt (110) in die Spanneinrichtung (310) der Vorrichtung (300);
- drehfestes Einspannen eines Hohlkörpers (200) in Bezug auf die Vorrichtung so, dass die Wandung des Hohlkörpers, in welche die Aushalsung eingebracht werden soll, mit der Längsachse des eingespannten Innenrollierdorns einen Winkel < 180°, beispielsweise 90° bildet;
- Bohren eines Lochs in die Wandung des Hohlkörpers mit dem Bohrer (135) an der Spitze des Innenrollierdorns (100) **durch** Drehantreiben und axiales Verlagern der Spanneinrichtung mit dem eingespannten Innenrollierdorn (100) auf den Hohlkörper (200) zu;
- weiteres axiales Verlagern der Spanneinrichtung (310) mit dem Innenrollierdorn (100) zunächst in Richtung des Hohlkörpers (200) so, dass seine Einkerbung (140) auf Höhe des Randes des Loches in der Wandung des Hohlkörpers (200) steht;
- Ausbilden der Aushalsung in der Wandung des Hohlkörpers (200) **durch**: Radiales Verlagern des Innenrollierdorns und freidrehendes Abrollen des Bodens der Einkerbung oder der dem Bohrabschnitt zugewandten Flanke (142) der Einkerbung auf dem Rand des Loches; und
gleichzeitig zunehmendes Verlagern des Innenrollierdorns axial von dem Hohlkörper weg bei gleichzeitigem Abrollen des Innenrollierdorns (100) im Randbereich des Loches zum Aufwölben der Wandung des Hohlkörpers (200) nach außen.

10. Verfahren nach Anspruch 9,
**gekennzeichnet durch**
axiales Verlagern des Innenrollierdorns (100) wieder auf den Hohlkörper (200) zu, so dass die dem Rollierabschnitt zugewandte Stirnseite (112) des Schaftabschnitts (110) dem aufgewölbten Rand des Loches gegenüber steht; und
weiteres axiales Verlagern des Innenrollierdorns auf die Aushalsung (210) zu bei gleichzeitigem Rotieren des Innenrollierdorns zum Planieren des Randes der Aushalsung mit der als spanabhebendes Werkzeug ausgebildeten Stirnseite (112) des Schaftabschnittes.
